# EUROPEAN PATENT APPLICATION

(11) **EP 4 495 295 A1**
(43) Date of publication of application: **22.01.2025**
(21) Application number: 24150179.0
(22) Date of filing: 03.01.2024
(51) Int. Cl.: C25D 1/00, C25D 1/04

(54) **POSITIVE ELECTRODE ASSEMBLY FOR MANUFACTURE OF COPPER FOIL**

(30) Priority: 17.07.2023 KR 20230092443; 17.07.2023 KR 20230092444; 13.10.2023 KR 20230136522
(71) Applicant: Wesco Electrode Co., Ltd., Changwon-si Gyeongsangnam-do 51561 (KR)
(72) Inventor: Kim, Sang Wook, 38073 Gyeongsangbuk-do (KR); Kim, Sang Soo, 51475 Gyeongsangnam-do (KR); Park, Mi Jung, 51318 Gyeongsangnam-do (KR); Kim, Jong Yeob, 51208 Gyeongsangnam-do (KR); Yang, Sea Yun, 51531 Gyeongsangnam-do (KR)
(74) Representative: Gee, Steven William

(57) **Abstract**

Disclosed is a positive electrode assembly for manufacture of copper foil. The positive electrode assembly includes a base having a concave arc-shaped section corresponding to a drum-type negative electrode and a plurality of electrodes arranged on the base in a circumferential direction, the plurality of electrodes being fastened to the base using a plurality of fastening bolts. The plurality of electrodes is fastened to the base in a state of not being deformed by fastening force of the fastening bolts and being maintained flat in shape, thereby responding to high current through adjustment of the thickness of each electrode. Each electrode has a thickness of 2 to 7 mm.

## Description

### BACKGROUND OF THE INVENTION

### Field of the Invention

The present invention relates to a positive electrode constituting a manufacturing apparatus for manufacturing electrolytic copper foil, and more particularly to a positive electrode assembly for manufacture of copper foil configured to respond to high current to improve efficiency.

### Description of the Related Art

Technology for manufacturing copper foil using electrolytic reaction is disclosed in Korean Patent Application Publication No. 10-2019-0038325. As shown in FIG. 1, an electrolytic copper foil manufacturing apparatus includes an insoluble positive electrode assembly 20 immersed in an electrolytic solution 12 of an electrolytic bath 10 and a rotary drum-type negative electrode assembly 30.

The insoluble positive electrode assembly 20 is installed so as to face the drum-type negative electrode assembly 30, and has a concave and partially cylindrical shape corresponding to the outer shape of the drum-type negative electrode assembly 30. When energization is achieved between the insoluble positive electrode assembly 20 and the drum-type negative electrode assembly 30, a metallic component may be grown on the surface of the drum-type negative electrode assembly 30.

When the drum-type negative electrode assembly 30 is rotated relative to the insoluble positive electrode assembly 20 in an energized state, therefore, copper foil is formed on the drum-type negative electrode assembly 30 through electrolytic precipitation. The copper foil thus formed may be peeled off from the drum-type negative electrode assembly 30, whereby the copper foil may be continuously obtained. A front surface of the positive electrode assembly 20 corresponding to the negative electrode assembly 30 may be said to be a part for generating substantial electrolytic reaction.

The positive electrode assembly 20 generally includes a positive electrode 22 installed so as to correspond to the negative electrode assembly 30 and a base 24 configured to support the positive electrode 22 at the rear thereof. A fastening element, such as a bolt, is generally used to couple the positive electrode 22 and the base 24 to each other such that the positive electrode 22 can be fixed. Here, if the entirety of the positive electrode assembly 20 is formed as a single continuous plate, this is most desirable in terms of uniformity in current density, and therefore the quality of copper foil that is produced may be guaranteed. In practice, however, a plurality of positive electrodes 22 is provided, and each of the positive electrodes 22 is fixed to the base 24.

In addition, as described above, the positive electrodes 22 must be spaced apart from the drum-type negative electrode assembly 30 by the same distance. When the positive electrodes 22 are fixed to the titanium base 24, therefore, the flat positive electrodes 22 are brought into tight contact with the concave base 24 using a plurality of bolts. That is, the flat positive electrodes 22 are formed as concave positive electrodes 22 that are radially concave and spaced apart from the negative electrode assembly 30 by the same distance.

In order to deform each of the flat positive electrodes so as to have a partial arc-shaped section using fastening force of the bolt, however, a plurality of bolts and great fastening force by the plurality of bolts are required. That is, the conventional positive electrode is physically deformed by the bolt, whereby residual stress is present in the positive electrode, which is undesirable.

In addition, the thickness of the positive electrode is substantially limited in order to deform the positive electrode. For example, positive electrodes that are currently used have a thickness of about 1 mm. However, this thickness is undesirable in terms of an increase in efficiency by high current, which has been widely adopted in recent years.

### SUMMARY OF THE INVENTION

It is an object of the present invention to provide a positive electrode for electrolysis configured such that the positive electrode is sufficiently thick, whereby high current for electrolytic reaction is used, and therefore productivity is improved.

It is another object of the present invention to provide a positive electrode for electrolysis configured such that the positive electrode is not deformed by fastening force, whereby the positive electrode is fixed to a base with relatively low fastening force.

It is a further object of the present invention to provide a positive electrode for electrolysis configured such that a smaller number of bolts is used, whereby a production process is simplified and a higher quality product is produced.

In accordance with the present invention, the above and other objects can be accomplished by the provision of a positive electrode assembly for manufacture of copper foil, the positive electrode assembly including a base having a concave arc-shaped section corresponding to a drum-type negative electrode and a plurality of electrodes arranged on the base in a circumferential direction. The electrodes are fastened to the base using fastening bolts. Here, the plurality of electrodes is supported by the base in a state of not being deformed by fastening force of the fastening bolts and being maintained flat in shape, whereby it is possible to respond to high current through adjustment of the thickness of each electrode.

In an embodiment, the fastening bolts may fasten the electrodes to the base in a state of extending through fastening holes formed in the electrodes.

In another embodiment, a stud bolt fixed to the base may be coupled to a fastening nut in a coupling recess formed in an inner surface of the base.

In an embodiment related to the thickness of each electrode, the electrode may have a thickness of 2 to 5 mm.

A burred portion having a shape corresponding to a lower surface of the fastening bolt may be formed around the fastening hole.

### BRIEF DESCRIPTION OF THE DRAWINGS

The above and other objects, features and other advantages of the present invention will be more clearly understood from the following detailed description taken in conjunction with the accompanying drawings, in which:

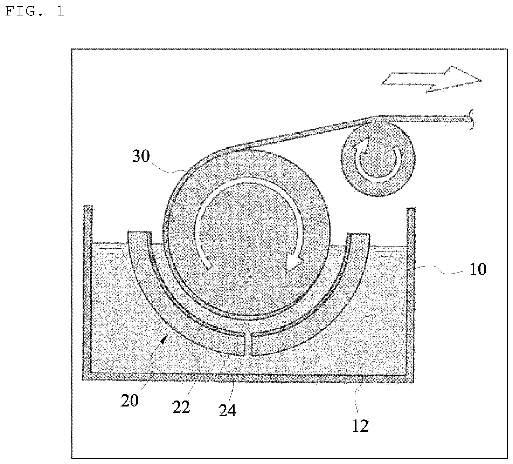

FIG. 1 is a view illustrating a conventional electrolytic copper foil manufacturing apparatus;
FIG. 2 is a sectional view illustrating a positive electrode assembly according to an embodiment of the present invention;
FIG. 3 is a view describing electrode arrangement according to the present invention and conventional electrode arrangement based on comparison therebetween;
FIG. 4 is a sectional view illustrating a positive electrode assembly according to another embodiment of the present invention;
FIG. 5 is a sectional view illustrating a positive electrode assembly according to a further embodiment of the present invention; and
FIG. 6 is a sectional view illustrating an electrode of the embodiment shown in FIG. 5.

### DETAILED DESCRIPTION OF THE INVENTION

The present invention will now be described in more detail with reference to embodiments shown in the drawings. In the present invention, a positive electrode corresponds to a drum-type negative electrode, as mentioned above, and the positive electrode is formed so as to have a concave and partially cylindrical shape.

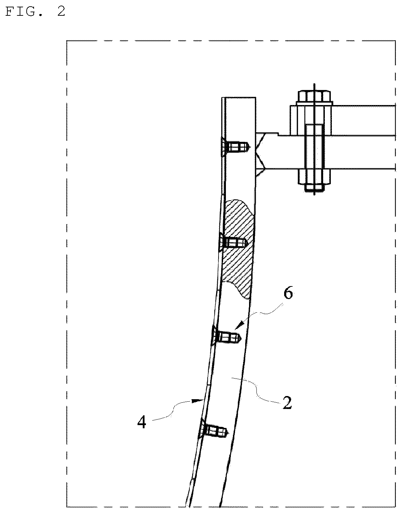

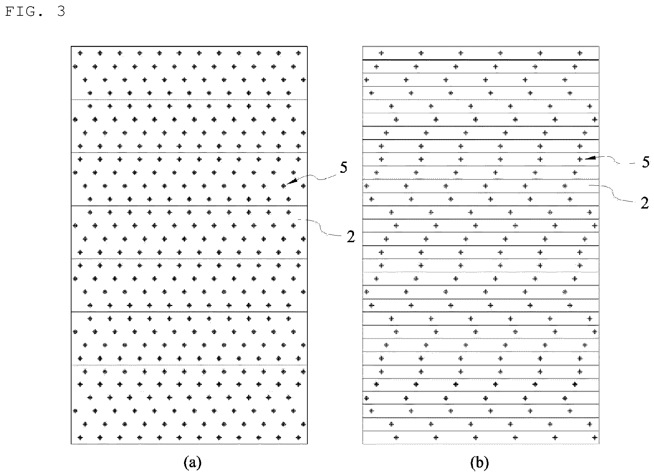

FIG. 2 is a sectional view showing a positive electrode assembly according to an embodiment of the present invention, and FIG. 3 is a development view showing a conventional electrode and an electrode according to the present invention. As shown, a base 2 is formed in a concave arc-shape overall equally spaced apart from a cylindrical drum so as to correspond to the cylindrical drum, and a plurality of electrodes (positive electrodes) 4 is attached to a concave surface of the base 2.

In the present invention, a plurality of, for example 55, electrodes (positive electrodes) 4 is attached in a circumferential direction, as shown in FIG. 3, which is significantly greater than the number of conventional electrodes, which is 16. That the number of electrodes 4 significantly greater than the number of conventional electrodes is installed in the circumferential direction means that the circumferential length of the electrodes is significantly shorter than the circumferential length of the conventional electrodes, whereby each of the electrodes is formed so as to have an overall arc shape, and therefore contact between the electrodes and the base 2 may be further secured.

In addition, the thickness of the electrode 4 according to the present invention is greater than the thickness of the conventional electrode (about 1 mm). When such a thick electrode 4 is used, productivity of electrolytic copper foil is of course greatly improved as the result of using high current.

When the thickness of the electrode 4 is increased, as described above, it is very difficult to deform the electrode 4 so as to correspond to the arc shape of the base 2. When a plurality of electrodes 4 is fastened to the base 2 by fastening bolts, great force is required in order to deform the circumferential section of each electrode into an arc shape by fastening force. If such great force is applied to the electrode 4, residual stress in electrode 4 is significantly increased, causing difficulty in an assembly process as well as various disadvantages in follow-up management.

Therefore, the basic idea of the present invention is to fix a plurality of electrodes 4 to the base 2 without changing the flat shape of each electrode. That the plurality of electrodes 4 is mounted in the state in which the flat shape of each electrode is maintained, as described above, means that it is possible to use electrodes 4 that are substantially thicker than the conventional electrodes, and therefore it is possible to use high current. In addition, electrodes 4 which are thick and each of which has a very short circumferential length are used, whereby the number of electrodes 4 is increased.

That electrodes thicker than the conventional electrodes can be used has the same meaning as that high current for electrolytic reaction can be used, which ultimately means that it is possible to further improve productivity and efficiency of electrolytic copper foil. Consequently, the electrode 4 used in the positive electrode assembly according to the present invention may be characterized in that a thicker electrode is used, whereby it is possible to sufficiently respond to high current, and in that deformation of the electrode by fastening force is prevented when the electrode is attached to the base 4, whereby it is possible to improve assemblability and to use high current.

Here, when the shape of the electrode is not changed by fastening force, there is the advantage that fastening of the fastening bolt 6 is possible with the minimum fastening force required to fix the position of the electrode 4. This feature will be described with reference to FIG. 3. The transverse length of the electrode 4 (corresponding to the axial length of the cylindrical negative electrode) is substantially unchanged, whereas the longitudinal length of the electrode 4 (corresponding to the circumferential length of the cylindrical negative electrode) is significantly shorter than the conventional electrode.

For example, the number of conventional electrodes is about 16, whereas the number of electrodes 4 according to the present invention is about 55, which means that the circumferential length of the electrode 4 is significantly shorter than the circumferential length of the conventional electrode. Furthermore, in order to use the fastening bolt 6, a fastening hole must be formed in the electrode 4 in advance, and a projection by which a head of the fastening bolt 6 is caught is formed in the fastening hole. Consequently, it is possible to ensure that the head of the fastening bolt 6 does not protrude beyond the electrode 4.

In FIG. 3, (a) shows conventional electrode plates and bolt fastening holes, and (b) shows electrode plates according to the present invention and bolt fastening holes. As can be seen from FIG. 3, it can be seen that, in the electrode assembly of the present invention, the number of fastening holes 5 required to fasten the electrodes 4 to the base is significantly reduced. A significant reduction in the number of fastening holes 5 is equivalent to a significant reduction in the number of fastening bolts for assembly.

Referring to FIG. 3, it can be seen that the fastening holes 5 are formed so as not to overlap each other as much as possible in a vertical direction. This serves to maximally inhibit deterioration in quality of a product due to overlapping of the bolts in the vertical direction (the direction of rotation of the negative electrode). The fastening holes formed in the plurality of electrodes 4 are formed so as to be spaced apart from each other by a certain distance in the transverse direction (the axial direction of the negative electrode), compared to fastening holes thereabove or thereunder.

It can be seen that this arrangement of fastening holes 5 is applied to an electrode set including a certain number of electrodes (for example, 7) and a plurality of electrode sets is repeatedly arranged to complete the overall fastening hole arrangement of the electrodes 4. It can be seen from FIG. 3 that the arrangement of the fastening holes 5 in the longitudinal direction is not overlapped, whereby it is possible to minimize problems with a product in response to high current. In FIG. 3(a) and 3(b), the number of fastening holes and the degree of overlap of the fastening holes in the longitudinal direction may be clearly compared.

As mentioned above, the electrodes 4 of the present invention are not deformed in sectional shape by the fastening bolts 6 and maintain the flat shape thereof. At the same time, the number of electrodes 4 is sufficiently increased such that the lateral or sectional shape formed by the plurality of electrodes is as close to an arc shape as possible. Of course, when the number of electrodes 4 is increased, the contact area between the electrodes 4 and the base 2 becomes wider.

Here, that the flat shape of each electrode is maintained in a state of being fastened to the base 2 may ultimately mean that only upper and lower end parts of each electrode 4 are in contact with the base 2 based on FIG. 3 or the drum-type negative electrode. This state may be expressed as the state in which the middle part of each electrode 4 is slightly spaced apart from the base 2.

In the present invention, as described above, when the electrodes 4 are fastened to the base 2 by the plurality of fastening bolts 6, assembly is performed in the state in which the electrodes are not deformed by fastening force and the flat shape of each electrode is maintained. As a result, it is possible to supply high current due to an increase in thickness of each electrode 4, thereby achieving high efficiency.

Experiments performed by inventors of the present application show that the thickness of the electrode 4 for high current is efficient in a range of 1.5 mm to 7 mm and that efficiency decreases at thicknesses greater than the above range. The experiments also show that the thickness of the electrode 4 is more preferably 2 to 5 mm.

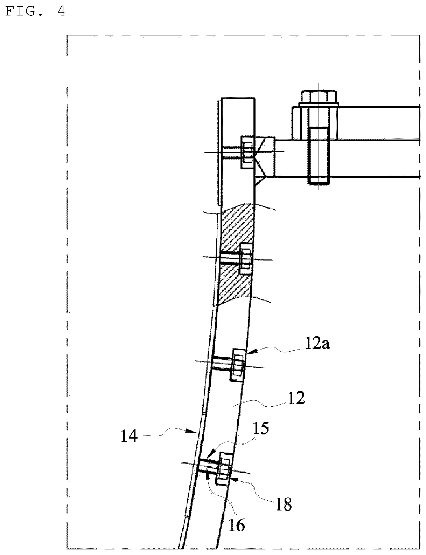

Next, an embodiment shown in FIG. 4 will be described. The electrode 14 according to this embodiment is substantially identical in construction to the electrode according to the previous embodiment except for the structure for fixing the electrode 14 to the base 12. In the description of the embodiment of FIG. 4, therefore, the description of the construction of the electrode 14 will be omitted, and only the structure for fixing the electrode 14 to the base 12 will be described.

As can be seen from FIG. 4, a stud bolt 16 is fixed to an inner surface of the electrode 14 by welding. The base 12 is provided with a through-hole 15 through which the stud bolt 16 extends. The stud bolt 6 is coupled to the base 12 in a state of extending through the through-hole 15. The stud bolt 16 has a length that does not protrude out of rear surface of the base 12. In the embodiment shown, the stud bolt 16 does not protrude outwardly from a coupling recess 12a formed in an inner surface of the base 12.

In the coupling recess 12a, a fastening nut 18 is screwed onto the stud bolt 16. Even in this embodiment, the electrode 14 of the present invention is not deformed in sectional shape by the fastening bolt 16 and maintains the flat shape thereof, as mentioned above. At the same time, the number of electrodes 14 is sufficiently increased such that the lateral or sectional shape formed by a plurality of electrodes is as close to an arc shape as possible.

Even in this embodiment, when the electrodes 14 are fastened to the base 12 by the plurality of fastening bolts 16, assembly is performed in the state in which the electrodes are not deformed by fastening force and the flat shape of each electrode is maintained. As a result, it is possible to supply high current due to an increase in thickness of each electrode 14, thereby improving productivity.

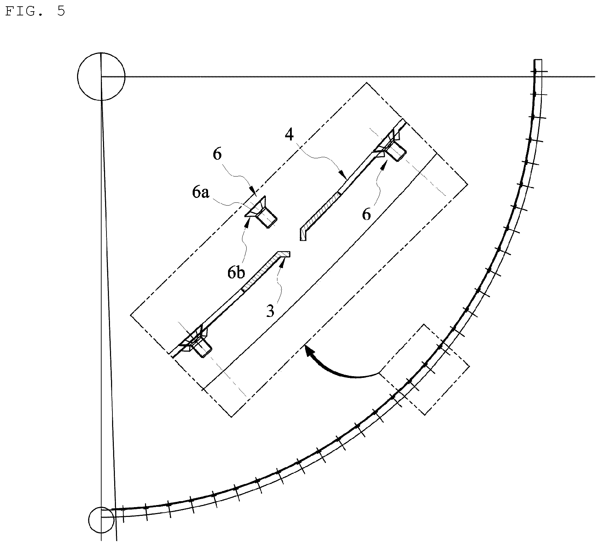

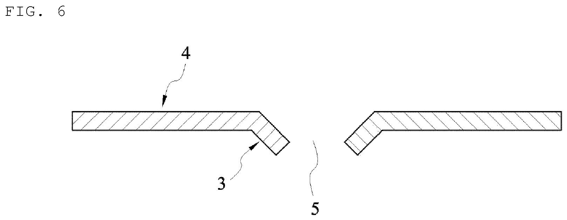

Next, a preferred embodiment for fastening an electrode 4 to a base will be described in more detail with reference to FIGs. 5 and 6. A fastening hole 5, through which a fastening bolt 6 extends, is formed in the electrode 4, and a burred portion 3 is formed around the fastening hole 5. The burred portion 3 is also formed when the fastening hole 5 is formed by pressing using a punch and a die in order to sufficiently enlarge the area of contact with the fastening bolt 6.

The shape of an upper surface of the burred portion 3 corresponds to the shape of a lower surface 6b of a head 6a of the fastening bolt 6. That is, when the head 6a of the fastening bolt 6 is inserted into the burred portion 3, the lower surface 6b of the head 6a comes into tight contact with the upper surface of the burred portion 3. As a result, the upper surface of the burred portion 3 and the lower surface 6b of the head 6a come into contact with each other over corresponding areas thereof, whereby energization is achieved therebetween. Consequently, it can be seen that the area of contact between the burred portion 3 and the fastening bolt 6 is sufficiently secured and a high current can flow through the area.

If the burred portion 3 interferes with the base 4 when the electrode is fastened to the base via the fastening bolt 6, it is preferable to form an overall groove around the fastening hole of the base 4, to which the fastening bolt 6 is coupled.

In the present invention, as described above, the bolt 6 that is fastened to the base 4 has only fastening force to such an extent that the electrode is not deformed, and therefore the electrode 2 may be formed so as to be sufficiently thick. In addition, it can be seen that a high current can stably flow between the electrode 2 and the bolt 6 through the burred portion 3. In this respect, it can be said that it is possible to sufficiently respond to the trend of high current to improve productivity. Here, it is obvious that a lower part of a threaded portion 6d of the bolt 6 is coupled to the base 2.

According to the present invention with the above configuration, assembly is basically performed in the state in which the electrodes are not deformed and the flat shape of each electrode is maintained, and therefore it is possible to minimize limitation on the thickness of the electrodes. That is, it is possible to use thicker electrodes, for example, electrodes each having a thickness of 2 to 7 mm, by applying the structure of the present invention. When such thicker electrodes are used, it is possible to correspond to high current, and therefore it is possible to substantially improve productivity.

In addition, according to the present invention, the electrodes are fixed to the base with bolt tightening force that does not cause deformation of the electrodes. In a production process, therefore, easy assembly is achieved, whereby productivity is improved. Furthermore, it is possible to significantly reduce the number of fastening bolts necessary to fix the electrodes to the base, which is advantageous in the assembly process, and the quality of a product is improved due to a decrease in number of fastening bolts.

Those skilled in the art to which the present invention pertains will appreciate that various modifications are possible within the scope of the basic technical idea of the invention as described above, and it is natural under the provisions of the Patent Act that the scope of protection of the present invention should be construed based on the description of the claims.

## Claims

1. A positive electrode assembly for manufacture of copper foil, the positive electrode assembly comprising:
a base having a concave arc-shaped section corresponding to a drum-type negative electrode;
a plurality of electrodes arranged on the base in a circumferential direction; and
a fastening means configured to fasten the electrodes to the base, wherein
the plurality of electrodes is supported by the base in a state of not being deformed by fastening force of the fastening means and being maintained flat in shape, thereby responding to high current through adjustment of a thickness of each electrode.

2. The positive electrode assembly according to claim 1, wherein the fastening means comprises a fastening bolt configured to fasten each electrode to the base in a state of extending through a fastening hole formed in the electrode.

3. The positive electrode assembly according to claim 1, wherein the fastening means comprises:
a stud bolt fixed to an inner surface of the base by welding; and
a fastening nut configured to be coupled to the stud bolt that has extended through the base in a coupling recess formed in the inner surface of the base.

4. The positive electrode assembly according to claim 1, wherein each electrode has a thickness of 2 to 5 mm.

5. The positive electrode assembly according to claim 2, wherein a burred portion having a shape corresponding to a lower surface of the fastening bolt is formed around the fastening hole.
